Europäisches Patentamt

European Patent Office

Office européen des brevets

(19)

(11) Publication number: **0 163 991**
**B1**

(12) # EUROPEAN PATENT SPECIFICATION

(45) Date of publication of patent specification: **10.08.88**

(51) Int. Cl.⁴: **B 60 J 5/04,** B 60 R 13/06

(21) Application number: **85105879.2**

(22) Date of filing: **13.05.85**

(54) **Vehicle door with improved structure and gaskets.**

(30) Priority: **22.05.84 IT 5341684 u**

(43) Date of publication of application:
**11.12.85 Bulletin 85/50**

(45) Publication of the grant of the patent:
**10.08.88 Bulletin 88/32**

(84) Designated Contracting States:
**DE FR GB SE**

(56) References cited:
**DE-A-3 148 255**
**DE-C- 883 091**
**FR-A-1 327 861**
**FR-A-2 164 452**
**US-A-2 650 857**
**US-A-3 068 045**

(73) Proprietor: **FIAT AUTO S.p.A.**
**Corso Giovanni Agnelli 200**
**I-10135 Torino (IT)**

(72) Inventor: **Maioli, Mario**
**Str. San Vincenzo, 40/35**
**I-10100 Torino (IT)**
Inventor: **Franzero, Pier Renato**
**Via Spazzapan, 12**
**I-10135 Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

EP 0 163 991 B1

## Description

This invention relates to a vehicle door of the type comprising an outer covering element and an inner framework, with a constructional structure and seal gaskets of improved type.

The vehicle doors of the aforedescribed type, such as, for instance, that described in US 2,650,857 may be realized of composite structure and have the object to be of relatively low cost, high efficiency and simple and rapid fitting and assembly. In order to attain these objects the elements that have the maximum importance are the gaskets, their structure, and their way of assembly. For example, the door of US 2,650,857 has a general structure, due to the position of the gaskets necessary to seal the two faced structural elements which form the door, that does not allow the window pane to be placed flush with the outer element, so that the door has not a good aerodynamic. Generally speaking, the door of the aforedescribed type and particularly that of US 2,650,857 have further the drawback of being unadapted to be employed on vehicles having a simplified structure, and in particular dispensed with a lateral drip element or drain channel.

An object of the present invention is to provide a door of the type that of US 2,650,857 having a structure which enables both the window pane to be placed substantially flush with the outer surface of the door and the structure of the roof panel of the vehicle on which the door is mounted to be simplified, particularly by dispensing with the lateral drip elements or drain channels of said roof panel. Further objects and advantages of the door according to the present invention will be apparent from the description given hereinafter.

The said objects are attained according to the present invention by a vehicle door of the type comprising an outer covering element provided upperly with a frame-shaped portion defining on the outside of the door a window aperture for said vehicle, and an inner framework provided upperly with a corresponding frame defining said window aperture on the inside of the door, said frame being provided on opposite sides with respective opposing seats for a pair of respective seal gaskets, a first of said gaskets internally bounding the edge of said window aperture and being arranged to cooperate in a fluid-tight manner with the descending window pane of said door and for which it forms part of the slide seat, and said frame-shaped portion being provided with an inner flange-shaped edge arranged substantially to hide this latter from an observer external to said vehicle, characterized in that said inner flange-shaped edge is disposed parallel to an outer lip of said first gasket, whereby a second of said gaskets of said pair of gaskets carried by said frame is arranged to upperly define a lateral drain channel for the roof panel of said vehicle.

The present invention will be more apparent from the non-limiting description given hereinafter of one embodiment thereof with reference to the accompanying drawing, in which:

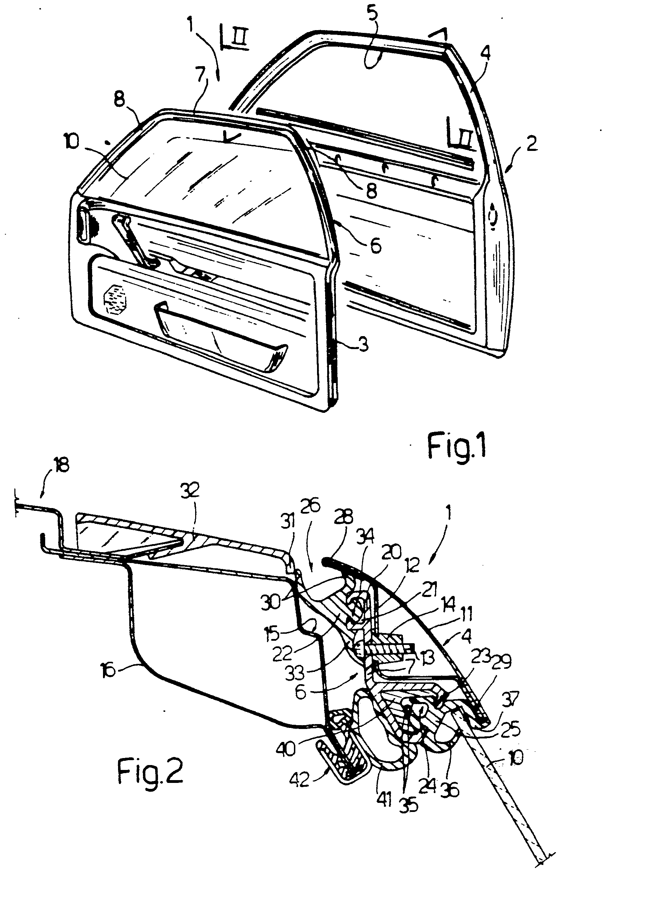

Figure 1 is a diagrammatic exploded perspective view of a vehicle door constructed in accordance with the present invention; and Figure 2 is a section on the line II-II through the door of Figure 1 to an enlarged scale.

In Figure 1, the reference numeral 1 indicates overall a door for any vehicle of known type, not shown for simplicity, comprising an outer covering element 2 arranged to externally define said door, and an inner framework 3 arranged to carry preassembled all the accessories of said door such as the window regulator, the descending window pane, the locks and the inner finishing panel, and to be mounted on the production line rigid with the element 2 after painting the vehicle body, so as to form the door 1. Such a door is known and is described in detail in Italian patent application no. 67336-A/82 of the present applicant, filed on 17 March 1982, entitled "Door, particularly for motor vehicles, and a method for its assembly", the contents of which are incorporated herein for simple reference with respect to the necessary parts.

The covering element 2 is provided upperly with a frame-shaped portion 4 defining on the outside of the door 1 a window aperture 5, for example the side widow aperture of said known vehicle, not shown for simplicity, and the inner framework 3 comprises a crossmember 4 arranged to carry said accessory devices of the door 1, and an upper frame 6 disposed in such a manner that when the door 1 is assembled it faces the corresponding frame-shaped portion 4 of the element 2, and defining said window aperture 5 on the inside of the door 1. The frame 6 itself comprises an upper cross-member 7 and respective uprights 8 formed preferably integrally with the cross-member 7 and arranged to define respective slide guides for said descending window pane of the door 1, which is indicated by 10 in Figures 1 and 2.

As can be seen in Figure 2, the covering element 2, and in particular the frame-shaped portion 4 thereof, is formed by joining together a pair of respective suitably shaped and cut metal plates 11 and 12, whereas the frame 6 is preferably formed by moulding a synthetic plastics material and is rigidly fixed to the frame-shaped portion 4 by respective connection elements constitute, in the non-limiting example illustrated, by screws 13 screwed into suitable respective blocks 14 also of plastics construction. According to the invention, the door 1 is arranged to engage with the corresponding abutment seat 15 provided on said vehicle and defined by a sheet metal box section 16, illustrated purely by way of example in Figure 2 together with a portion of the roof panel 18 of said known vehicle, not shown for simplicity, and is arranged to define in the upper part, in the manner described hereinafter, the lateral drip element or drain channel of said roof panel 18, so as to be particularly suitable for use on vehicles without lateral drain channels.

According to the invention the frame 6 is substantially of L shape and comprises an upper rim 20 directed towards the interior of said vehicle, not shown, and facing the seat 15, said rim 20 being provided towards the box section 16 with a seat 21 for a corresponding seal gasket 22, and further comprises a lower rim 23 directed towards the frame-shaped portion 4 of the outer covering element 2 and disposed substantially in line with the window pane 10, said rim 23 being provided with a seat 24 for a corresponding seal gasket 25 disposed in an opposing position to the seat 21. The seats 21 and 24 are provided on opposite sides of the frame 6 and are formed substantially as channels of C and V configuration respectively, integral with the frame 6 and provided along the entire length thereof.

The gasket 25 internally bounds the edge of said window aperture 5 and is arranged to cooperate in a fluid-tight manner with the window pane 10, for which it forms part of the slide seat at the uprights 8, whereas the gasket 22 is arranged to upperly define, together with part of the frame-shaped portion 4, a lateral drain channel 26 for the roof panel 18. In particular, the frame-shaped portion 4 is provided with respective opposing flange-shaped edges 28 and 29 formed by the superimposed joint between the metal plates 11 and 12, and the channel 26 is defined by a pair of respective upper lips 30 of the gasket 22, by said edge 28 of the frame-shaped portion 4, and by a corresponding edge 31, facing the edge 28, of the roof panel 18. The lips 30 cooperate in a fluid-tight manner with the edges 28 and 31 respectively, against which they are compressed with a predetermined force when the door 1 is closed, and the edge 31 preferably forms part of a plastics element 32 defining the side portion of the roof panel 18 surrounding the corresponding door 1, and is fixed in any convenient manner, for example by cementing, to the constituent metal plates of said roof panel 18. According to the invention, the gasket 22 also comprises a lower lip 33 orientated in substantially the opposite direction to that along which the lips 30 extend, and is arranged to cover the screws 13, being preferably cemented by sealant materials to the frame 6 so as to protect in a fluid-tight manner the joint zone between this latter and the frame-shaped portion 4, and further comprises a substantially T-shaped rib 34 orientated substantially at 90° to the lip 33 and arranged to engage said C-shaped seat 21 by insertion, so as to ensure the fixing of the gasket 22 to the frame 6. In contrast, according to the invention, the gasket 25 has a substantially X-shaped cross-section and comprises a first pair of lips 25 arranged to engage said V-shaped seat 24 by insertion, and a second pair of lips 36 and 37 respectively, arranged to cooperate with the descending window pane 10 and to define said lateral slide seats therefor. According to the invention, the lip 36 cooperates with the inner surface of the window pane 10, whereas the lip 37 is disposed substantially in line with the window pane 10 and rests against the corresponding inner flange-shaped edge 29 of the frame-shaped portion 4, this edge being disposed parallel to said lip 37 so as to be able to substantially hide the gasket 25 from an observer external to said vehicle. Preferably, the lip 37 is cemented on to the inner surface of the flange-shaped edge 29, whereas the lips 35 are retained in the seat 24 by a further element 40 inserted into said seat. On the side facing the box section 16, in a position corresponding with the seat 24, the frame 6 also externally carries a gasket 41 of known type arranged to cooperate with a corresponding sealing assembly 42, also of known type, fixed in known manner to the box section 16.

The advantages of the door constructed in accordance with the present invention are apparent from the description. The particular shape of the frame 6 and position of the seats 21 and 24 enable the gaskets 22 and 25 to be premounted on the frame 6 before the framework 3 is fitted on to the outer covering element 2 on the production line, and thus enables these operations, together with the mounting of the other door elements and accessories on the cross-member 4, to be performed off the production line instead of on the production line as in doors of known type. Furthermore, the particular arrangement and shape of the gasket 25 and the structure of the component elements of the door 1 enable the gasket outer seal lip, which cooperates with the descending window pane, to be disposed substantially in line therewith leading to considerable reduction in aerodynamic turbulence which can be created at the window aperture 5 when the vehicle on which the door 1 is mounted runs at relatively high speed. Finally no finishing elements such as chromium-plated trims or the like are required on the door according to the invention for hiding the seal gasket of the window pane 10 from the outside. This is because this seal gasket is hidden by the presence of the flange 29, with the result that by virtue of the invention a door is obtained which is not only of pleasing appearance because of the absence of exposed gaskets, but is of relatively low cost and is very simple to assemble and dismantle, because of the absence of said finishing elements.

**Claims**

1. A vehicle door (1) of the type comprising an outer covering element (2) provided upperly with a frame-shaped portion (4) defining on the outside of the door (1) a window aperture (5) for said vehicle, and an inner frame work (3) provided upperly with a corresponding frame (6) defining said window aperture (5) on the inside of the door, said frame (6) being provided on opposite sides with respective opposing seats (21,24) for a pair of respective seal gaskets (22,25), a first of said gaskets (25) internally bounding the edge of said window aperture (5) and being arranged to cooperate in a fluid-tight manner with the descending window pane (10) of said door (1) and for which it forms part of the slide seat, and said frame-shaped portion (4) being provided with an inner flange-shaped edge (29) arranged substantially to hide this latter from an observer external to said vehicle, characterized in that said inner flange-shaped edge (29) is disposed parallel to an outer lip (37) of said first gasket (25), whereby a second (22) of said gaskets of said pair of gaskets (22,25) carried by said frame (6) is arranged to upperly define a lateral drain channel (26) for the roof panel (18) of said vehicle.

2. A door (1) as claimed in claim 1, characterised in that said frame (6) is substantially of L Shape and comprises: an upper rim (20) directed towards the vehicle interior and facing the abutment seat (15) of said door (1), said upper rim (20) being provided with a first of said opposing seats (21) and carrying said second gasket (22); and a lower rim (23) directed towards said frame-shaped portion (4) of the outer covering element (2) and disposed substantially in line with said descending window pane (10), said lower rim (23) being provided with the second of said opposing seats (24) and carrying said first gasket.

3. A door as claimed in claim 2, characterised in that said first seat (21) is configured substantially as a C-shaped channel integral with said frame (6), and in that said second gasket (22) comprises two upper lips (30) arranged to respectively cooperate, in a fluid-tight manner, with respective facing edges (28,31) of said vehicle roof panel (18) and of said frame-shaped portion (4) of the outer element (2) of the door, in order to define said drain channel (26), and further comprises a lower lip (33) arranged to cover respective connection elements (13) which rigidly join said outer covering element (2) to said inner framework (3), and a substantially T-shaped rib (34) arranged to engage said first seat (21) by insertion.

4. A door (1) as claimed in claim 2 or 3, characterised in that said second seat (24) is configured substantially as a V-shaped channel integral with said frame (6), and in that said first gasket (25) has a substantially X-shaped cross-section comprising a first pair of lips (35) arranged to engage said second seat (24) by insertion, and a second pair of lips (36,37) arranged to cooperate with said descending window pane (10) and to define the lateral slide seats for this latter; said second pair of lips comprising said outer lip (37), which is disposed substantially in line with said descending window pane (10) and rests against said inner edge (29) of said frame-shaped portion 4.

5. A vehicle characterised by comprising a door (1) as claimed in one of claims 1 to 4.

**Patentansprüche**

1. Fahrzeugtür (1) von der Art mit einem äusseren Abdeckelement (2) und einem rahmenförmigen Teil (4), welches am Türäussern (1) eine Fensteröffnung (5) für das Fahrzeug begrenzt, sowie einem Innenrahmenwerk (3) mit oben einem entsprechenden Rahmen (6), welcher die Fensteröffnung im Türinnern begrenzt, wo der Rahmen (6) an den gegenüberliegenden Seiten entsprechende Sitze (21,24) für ein entsprechendes Dichtungspaar (22,25) aufweist, wo eine erste Dichtung (25) im Innern den Rand der Fensteröffnung (5) begrenzt und zur Flüssigkeitsabdichtung beim Herunterlassen des Fensters (10) der Tür (1) vorgesehen ist und Teil des Schiebesitzes ist und wo das rahmenförmige Teil (4) einen flanschförmigen Innenrand (29) aufweist, der im wesentlichen vorgesehen ist um diesen von aussen zu verdecken, dadurch gekennzeichnet dass der flanschförmige Innenrand (29) parallel zum Aussenrand (37) der ersten Dichtung (25) verläuft, weshalb eine zweite Dichtung (22) des am Rahmen (6) montierten Dichtungspaares (22,25) dazu vorgesehen ist, oben einen seitlichen Ablaufkanal (26) für das Dach (18) des Fahrzeuges 1) zu schaffen.

2. Wagentür (1) nach Anspruch 1, dadurch gekennzeichnet dass der Rahmen (6) im wesentlichen L-förmig ist und oben sich nach dem Wageninnern erstreckenden und einem Anlagesitz (15) der Tür gegenüberliegenden Rand (20) aufweist, wo der obere Rand (20) einen ersten der gegenüberliegenden Sitze (21) und die zweite Dichtung (28) trägt, sowie ein unten sich zum rahmenförmigen Teil (4) des äusseren Abdeckelements (2) erstreckender Rand (23), der im wesentlichen linear zum herunterlassbaren Fenster (10) verläuft, wo der Innenrand (23) den zweiten der gegenüberliegenden Sitze (24) und die erste Dichtung aufweist.

3. Wagentür (1) nach Anspruch 2, dadurch gekennzeichnet dass der erste Sitz (21) im wesentlichen ein C-förmiger, einstückig am Rahmen (6) befestigter Kanal ist und dass die zweite Dichtung (22) zwei obere Lippen (30) zur Flüssigkeitsabdichtung mit entsprechenden gegenüberliegenden Rändern (28,31) des Autodaches (18) sowie mit dem rahmenförmigen Teil (4) des Aussenelementes der Tür (2) aufweist um den Ablaufkanal (26) zu begrenzen und ausserdem eine untere Lippe (33) besitzt, welche die entsprechenden Verbindungselemente (2) starr mit dem inneren Rahmenwerk (3) verbindet, sowie einen T-förmigen Steg (34) um den ersten Sitz (21) mittels Einführung zu beaufschlagen.

4. Wagentür nach Anspruch 2 oder 3, dadurch gekennzeichnet dass der zweite Sitz (24) im wesentlichen als V-förmiger, einstückig mit dem Rahmen (6) verbundener Kanal ausgeführt ist und dass die erste Dichtung (25) im wesentlichen X-förmig ist und ein erstes Lippenpaar (35) besitzt, um durch Einführung den zweiten Sitz zu beaufschlagen, sowie ein zweites Lipenpaar (36,37), welches mit dem heruntergehenden Fenster (10) zusammenwirkt und seine seitlichen Gleitsitze begrenzt, wo das zweite Lippenpaar (36,37) die Aussenlippe (37) enthält, welche im wesentlichen linear mit dem heruntergehenden Fenster (10) verläuft und am Innenrand (29) des rahmenförmigen Teils (4) anliegt.

5. Fahrzeug, dadurch gekennzeichnet, dass es eine Tür (1) nach einem der Ansprüche 1-4 aufweist.

**Revendications**

1. Porte de véhicule (1) du type comprenant un élément de revêtement extérieur (2) comportant vers le haut une portion en forme de cadre (4) délimitant sur l'extérieur de la porte (1) une ouverture de fenêtre (5) pour ce véhicule, et une ossature intérieure (3) comportant vers le haut un cadre correspondant (6) délimitant cette ouverture de fenêtre (5) sur l'intérieur de la porte, le cadre (6) comportant sur ses côtés opposés des sièges opposés respectifs (21,24) pour une paire de garnitures d'étanchéité respectives (22,25), une première garniture (25) délimitant intérieurement le bord de cette ouverture de fenêtre (5) et étant disposée pour coopérer de manière étanche aux fluides avec la vitre descendante (10) de cette porte (1), pour laquelle elle forme une partie du siège coulissant, la portion en forme de cadre (4) comportant un bord intérieur (29) disposé pour masquer pratiquement cette dernière à la vue d'un observateur extérieur au véhicule, caractérisée en ce que ce bord intérieur (29) est disposé parallèle à une lèvre extérieure (37) de la première garniture (25), et en ce que la deuxième garniture (22) de cette paire de garnitures (22,25) portée par le cadre (6) est disposée pour définir vers le haut une gouttière latérale (26) pour le panneau de toit (18) du véhicule.

2. Porte (1) selon la revendication 1, caractérisée en ce que le cadre (6) a pratiquement la forme d'un L et comporte: un rebord supérieur (20) dirigé en direction de l'intérieur du véhicule et en vis-à-vis du siège de butée (15) de cette porte (1), ce rebord supérieur (20) comportant un premier les sièges opposés (21) et portant la deuxième garniture (22), et un rebord inférieur (23) dirigé en direction de la portion en forme de cadre (4) de l'élément de revêtement extérieur (2) et disposé pratiquement aligné avec la vitre descendante (10), ce rebord inférieur (23) présentant le deuxième des sièges opposés (24) et portant la première garniture.

3. Porte selon la revendication 2, caractérisée en ce que le premier siège (21) a pratiquement la forme d'un canal en forme de C d'un seul tenant avec le cadre (6), en ce que la deuxième garniture (22) comporte deux lèvres supérieures (30) disposées pour coopérer respectivement, d'une manière étanche aux fluides, avec des bords respectifs en vis-à-vis (28,31) du panneau de toit du véhicule (18) et de la portion en forme de cadre (4) de l'élément extérieur (2) de la porte, afin de définir cette gouttière (26), et en ce que cette deuxième garniture (22) comporte en outre une lèvre inférieure (33) disposée pour recouvrir des éléments de liaison respectifs (13) qui solidarisent l'élément de revêtement extérieur (2) de l'ossature intérieure (3), et une nervure en forme de T (34) disposée pour coopérer par insertion avec le deuxième siège (21).

4. Porte (1) selon la revendication 2 ou la revendication 3, caractérisée en ce que le deuxième siège (24) a pratiquement la forme d'un canal en forme de V d'un seul tenant avec le cadre (6), et en ce que la première garniture (25) a une section transversale pratiquement en forme de X, comportant une première paire de lèvres (35) disposées pour coopérer, par insertion, avec ce deuxième siège (24), et une deuxième paire de lèvres (36,37) disposées pour coopérer avec la vitre descendante (10) et pour définir les sièges coulissants latéraux pour cette vitre, cette deuxième paire de lèvres comportant la lèvre extérieure (37) qui est disposée pratiquement alignée avec la vitre descendante (10) et repose contre le bord intérieur (29) de la portion en forme de cadre (4).

5. Véhicule, caractérisé en ce qu'il comporte une porte (1) selon l'une quelconque des revendications 1 à 4.

Fig.1

Fig.2